# EUROPÄISCHE PATENTSCHRIFT

(11) **EP 3 615 388 B1**
(45) Veröffentlichungstag und Bekanntmachung des Hinweises auf die Patenterteilung: **24.02.2021**
(21) Anmeldenummer: 18715691.4
(22) Anmeldetag: 04.04.2018
(51) Int. Cl.: B60R 21/264, F42B 3/26, F42B 3/107

(54) **ANZÜNDERTRÄGER, BAUGRUPPE, GASGENERATOR SOWIE VERFAHREN ZUR HERSTELLUNG EINES GASGENERATORS**
IGNITOR HOLDER, ASSEMBLY, GAS GENERATOR AND METHOD FOR MANUFCATURING A GAS GENERATOR
SUPPORT D'ALLUMEUR, MODULE, GÉNÉRATEUR DE GAZ AINSI QUE PROCÉDÉ DE FABRICATION D'UN GÉNÉRATEUR DE GAZ

(30) Priorität: 28.04.2017 DE 102017109209
(43) Veröffentlichungstag der Anmeldung: 04.03.2020
(73) Patentinhaber: ZF Airbag Germany GmbH, 84544 Aschau a. Inn (DE)
(72) Erfinder: WEBER, Bernd, 84513 Töging am Inn (DE)
(74) Vertreter: ZF Patentabteilung - DIPS
(86) Internationale Anmeldenummer: PCT/EP2018/058580
(87) Internationale Veröffentlichungsnummer: WO 2018/197168

(56) Entgegenhaltungen:
- WO-A1-2014/044830
- WO-A1-2016/093946
- DE-A1-102009 023 593

## Beschreibung

Die Erfindung betrifft einen Anzünderträger für eine Anzündereinheit eines Gasgenerators sowie eine Baugruppe umfassend eine Anzündereinheit und einen Anzünderträger. Zudem betrifft die Erfindung einen Gasgenerator mit einer derartigen Baugruppe sowie ein Verfahren zur Herstellung eines Gasgenerators.

In einem Kraftfahrzeug werden Gasgeneratoren beispielsweise eingesetzt, um das für einen Gassack eines Gassackmoduls benötigte Aufblasgas in kurzer Zeit bereitzustellen, sofern eine Steuereinheit ein Signal zu einer Aktivierung bzw. Auslösung des Gasgenerators ausgibt. Gasgeneratoren weisen hierzu üblicherweise eine Anzündereinheit auf, die mit der Steuereinheit des Kraftfahrzeugs oder des Gassackmoduls verbunden wird, sodass sich ein Anzünder der Anzündereinheit entsprechend ansteuern lässt. Die Verbindung erfolgt in der Regel über ein Kabel mit einem Stecker, der in eine Steckerbuchse der Anzündereinheit eingesteckt wird. Die Steckerbuchse wird auch als Retainer bezeichnet wird.

Zur Aufnahme der Anzündereinheit bzw. des Anzünders am Gasgenerator kann ferner ein Anzünderträger vorgesehen sein, der eine Schnittstelle zwischen dem Gasgeneratorgehäuse eines Gasgenerators und der Anzündereinheit darstellt. Je nach Ausbildung des Anzünderträgers lassen sich verschiedene Typen von Anzündereinheiten beim Gasgenerator verwenden. Der Anzünderträger ist üblicherweise an einem Ende des Gasgeneratorgehäuses angeordnet, sodass er eine durch das Gasgeneratorgehäuse gebildete Brennkammer, welche einen Treibstoff umfassen kann, abdichtet, wobei zumindest ein Teil des Aufblasgases für den Gassack durch einen Abbrand des Treibstoffes gebildet werden kann.

Die zur Ansteuerung der Anzündereinheit verwendeten Stecker können Massekontakte aufweisen, die mit dem Gasgeneratorgehäuse elektrisch verbunden werden, um das Gasgeneratorgehäuse zu erden bzw. einen elektrischen Potenzialausgleich zu schaffen, indem das Gasgeneratorgehäuse beispielsweise auf dasselbe elektrische Potenzial gebracht wird, welches eine Karosserie des Kraftfahrzeugs hat, in dem der Gasgenerator eingebaut ist.

Die Druckschrift WO 2014/044830 A1 offenbart einen Anzünderträger nach dem Oberbegriff des Anspruchs 1, für eine Anzündereinheit eines Gasgenerators, mit einem ersten Halterelement aus einem ersten Werkstoff und einem zweiten Halterelement aus einem zweiten, zum ersten Werkstoff unterschiedlichen Werkstoff, wobei beide Halterelemente formschlüssig miteinander koppelbar und zumindest teilweise formschlüssig ineinander steckbar sind.

An einem derartigen bekannten Anzünderträger ist von Nachteil, dass sich die beiden Halterelemente gegeneinander durch eine Rotationsbewegung verdrehen lassen. Anders ausgedrückt, ist eine unvorteilhafte Relativbewegung der beiden Halterelemente, insbesondere entlang ihres Umfangs an ihren aneinander anliegenden Kontaktflächen zueinander möglich.

Die Aufgabe der Erfindung ist es, vorgenannten Nachteil zu vermeiden bzw. einen Anzünderträger zu schaffen, der eine wohldefinierte Position für eine Anzündereinheit ermöglicht.

Die Aufgabe wird erfindungsgemäß durch einen Anzünderträger mit den Merkmalen des Patentanspruchs 1 gelöst.

Ferner wird die Aufgabe der Erfindung durch eine Baugruppe gelöst, die einen Anzünderträger der zuvor genannten Art und eine Anzündeinheit umfasst.

Des Weiteren stellt die Erfindung einen Gasgenerator bereit, der eine Baugruppe der zuvor genannten Art sowie ein, insbesondere toroidförmiges, Gasgeneratorgehäuse aufweist, in dem die Baugruppe zumindest teilweise aufgenommen ist.

Der Grundgedanke der Erfindung ist es, dass beide Halterelemente in Umfangsrichtung und in radialer Richtung formschlüssig koppelbar sind wobei das erste Halterelement ein erstes Sägezahnprofil aufweist und das zweite Halterelement ein zweites Sägezahnprofil aufweist, das mit dem ersten Sägezahnprofil des ersten Halterelements formschlüssig korrespondiert.

Das Gasgeneratorgehäuse und das Halterelement aus Metall können somit aus demselben Materialtyp gebildet sein. Insofern kann dieses Halterelement aus Metall kostengünstig über eine Schweißverbindung mit dem Gasgeneratorgehäuse verbunden werden.

Des Weiteren lässt sich der gesamte Anzünderträger kostengünstig herstellen, da das aus Metall gebildete Halterelement spanlos herstellbar ist, beispielsweise durch Fließpressen oder Extrudieren. Dieses Halterelement ist demnach ein werkzeugfallendes Bauteil. Das aus dem Kunststoff hergestellte Halterelement kann als Kunststoffteil ebenso kostengünstig hergestellt werden, beispielsweise als Spritzgussteil. Eine aufwendige Nachbearbeitung des Anzünderträgers ist somit nicht erforderlich. Ferner ist das Gewicht des Anzünderträgers aufgrund des aus Kunststoff hergestellten Halterelements im Vergleich zu einem Anzünderträger, der vollständig aus einem Metall gefertigt ist, reduziert.

Die formschlüssige Verbindung der beiden Halterelemente gewährleistet ferner, dass sich die Halterelemente in gewünschter Weise zueinander ausrichten und verdrehsicher in einem Gasgeneratorgehäuse aufgenommen werden können. Die beiden Halterelemente müssen demnach nicht zunächst miteinander verbunden werden, bevor sie in das Gasgeneratorgehäuse eingebracht werden, da sie in einfacher Weise aufeinander gesetzt bzw. zusammengesetzt werden. Dies vereinfacht die Montage des Anzünderträgers am Gasgeneratorgehäuse, da der Montageschritt eingespart werden kann, bei dem separate Halterelemente zunächst miteinander verbunden werden, beispielsweise miteinander verschweißt werden müssten. Die Halterelemente können also derart ausgebildet sein, dass sie sich sozusagen selbsttätig in gewünschter Weise zueinander ausrichten, wenn sie zusammengesetzt bzw. ineinander gesteckt werden.

Es ist also möglich, dass das erste Halterelement aus einem, insbesondere elektrisch leitfähigen, Metall gebildet und mit der Anzündereinheit, insbesondere einem Anzünder davon, zu einer vorgefertigten Montagegruppe zusammenbaubar ist. Das zweite Halterelement kann aus einem Kunststoff ausgebildet sein. Hierbei kann der Anzünder, der selbst ein vorgefertigtes Bauteil sein kann und ein Bestandteil der Anzündereinheit darstellt in das erste Halterelement eingesetzt und an bzw. in diesem befestigt werden, um die vorgefertigte Montagegruppe zu bilden, welche ihrerseits in das Generatorgehäuse eingesetzt und mit diesem verbunden, insbesondere verschweißt, werden kann. Danach kann das zweite Halterelement aus Kunststoff formschlüssig mit dem ersten Halterelement gekoppelt werden.

Die beiden Halterelemente lassen sich folglich im zusammengesetzten Zustand im Wesentlichen nicht relativ zueinander verdrehen, auch wenn die Halterelemente noch nicht im Gasgeneratorgehäuse befestigt sind Die formschlüssige Kopplung wird unter anderem über die beiden Sägezahnprofile erreicht, deren Spitzen bzw. "Zähne" jeweils in axialer Richtung weisen, insbesondere im zusammengesetzten Zustand des Anzünderträgers jeweils zueinander gewandt sind. Über die Sägezahnprofile ergibt sich demnach eine in Umfangsrichtung sowie in radialer Richtung formschlüssige Kopplung der beiden Halterelemente. Des Weiteren ist aufgrund der Sägezahnprofile eine große Anlagefläche zwischen den Halterelementen geschaffen. Die Anlagefläche kann als Fügefläche verwendet werden, wenn beispielsweise ein Klebematerial auf ein oder beide Sägezahnprofil(e) aufgebracht wird. Über die Sägezahnprofile lassen sich zudem Drehmomentbelastungen im Anzünderträger verhindern.

Insbesondere sind beide Sägezahnprofile jeweils an einem axialen Endbereich des entsprechenden Halterelements vorgesehen und jeweils zumindest bereichsweise ringförmig umlaufend ausgebildet. Folglich müssen die Sägezahnprofile nicht unbedingt geschlossen umlaufend ausgebildet sein, sondern sie können nur bereichsweise umlaufend ausgebildet bzw. unterbrochen ausgebildet sein. Die beiden axialen Endbereiche der jeweiligen entsprechenden Halterelemente sind in ihrem zusammengesetzten Zustand bzw. im zusammengesetzten Zustand des Anzünderträgers zueinander zugewandt, sodass sich die beiden Halterelemente über die Sägezahnprofile entsprechend kontaktieren. Die Sägezahnprofile verlaufen jeweils ringförmig mit dem gleichen radialen Abstand zu einem entsprechenden Mittelpunkt des jeweiligen Halterelements, durch den jeweils eine Längsachse des entsprechenden Halterelements verläuft.

Gemäß einem weiteren Aspekt weist das erste Halterelement eine gegenüber dem ersten Sägezahnprofil radial außenliegende und axial von dem zweiten Halterelement zurückversetzte erste Anschlagsfläche auf, wobei das zweite Halterelement eine gegenüber dem zweiten Sägezahnprofil radial außenliegende und axial zu dem ersten Halterelement hinweisende vorgelagerte zweite Anschlagsfläche aufweist, wobei beide Anschlagsflächen im zusammengesetzten Zustand der beiden Halterelemente aneinander anliegen und jeweils ringförmig ausgebildet sind. Die beiden Sägezahnprofile sind im zusammengesetzten Zustand des Anzünderträgers demnach nach radial außen hin sozusagen "geschützt", da die jeweiligen Ränder der Halterelemente über ihre Anschlagsflächen aneinander anschlagen. Im zusammengesetzten Zustand können die Sägezahnprofile demnach nicht von außen gesehen bzw. kontaktiert werden.

Ferner kann das erste Halterelement eine gegenüber dem ersten Sägezahnprofil radial innenliegende und axial zu dem zweiten Halterelement hinweisende vorgelagerte erste Kontaktfläche aufweisen, wobei das zweite Halterelement eine gegenüber dem zweiten Sägezahnprofil radial innenliegende und axial von dem ersten Halterelement zurückversetzte zweite Kontaktfläche aufweist, wobei beide Kontaktflächen im zusammengesetzten Zustand der Halterelemente aneinander anliegen und ringförmig ausgebildet sind. Die beiden Halterelemente kontaktieren sich im zusammengesetzten Zustand demnach auch über die Kontaktflächen, die gegenüber den Sägezahnprofilen radial innenliegend angeordnet sind.

Generell können sich die beiden Halterelemente somit über die radial außenliegenden Anschlagsflächen, die jeweiligen Sägezahnprofile sowie die radial innenliegenden Kontaktflächen kontaktieren. Die Kontaktflächen sowie die Anschlagsflächen sind dabei relativ zu den Sägezahnprofilen axial versetzt angeordnet, insbesondere axial vorgelagert bzw. axial zurückversetzt, sodass sich eine stufige Verbindung zwischen den beiden Halterelementen ergibt. Die stufige Verbindung zwischen den beiden Halterelementen weist demnach in radialer Richtung gesehen im Wesentlichen drei Stufen auf, die aufgrund der Anschlagsflächen, der Sägezahnprofile und der Kontaktflächen gebildet sind. Hierdurch wird im Schnittstellenbereich der beiden Halterelemente eine hohe Stabilität erreicht, da der axiale Endbereich des einen Halterelements im anderen Halterelement geführt ist.

Die Sägezahnprofile können derart ausgebildet sein, dass sie mit ihren Spitzen bzw. Tälern in die jeweiligen radial außenliegenden Anschlagsflächen laufen. Alternativ oder ergänzend können die Sägezahnprofile derart ausgebildet sein, dass sie mit ihren Spitzen bzw. Tälern in die jeweiligen radial innenliegenden Kontaktflächen laufen.

Ein weiterer Aspekt sieht vor, dass die Anschlagsflächen und/oder die Kontaktflächen jeweils ringförmig ausgebildet sind. Hierdurch ergibt sich die Formschlussverbindung der beiden Halterelemente in radialer Richtung, da die jeweiligen Flächen in axialer Richtung zueinander versetzt sind, insbesondere gegenüber den in radialer Richtung gesehen zwischen den Flächen angeordneten Sägezahnprofilen.

Ein Aspekt sieht vor, dass das erste Halterelement zumindest bereichsweise umgeformt ist, sodass die Anzündereinheit vom ersten Halterelement zumindest teilweise aufgenommen ist. Zusätzlich oder alternativ dazu ist die Anzündereinheit, insbesondere ein Anzünder davon, mit dem ersten Halterelement zumindest bereichsweise verklebt. Beispielsweise ist also der Anzünder der Anzündereinheit im ersten Halterelement gekrimpt oder gebördelt. Aufgrund der plastischen Verformung des ersten Halterelements ist sichergestellt, dass die Position des Anzünders in Bezug auf den Anzünderträger festgelegt ist.

Gemäß einem weiteren Aspekt weist die Anzündereinheit eine Steckerbuchse auf, die in das zweite Halterelement eingesetzt ist. Die Steckerbuchse stellt die übliche Steckerschnittstelle dar, bei der eine entsprechende Steck-Codierung vorgesehen ist. Üblicherweise ist die Steckerbuchse aus einem Kunststoff hergestellt, wobei ein Metalleinlegeteil vorgesehen ist, über das wenigstens eine Kurzschlussfeder sowie wenigstens ein Erdungselement in Form von einer Massekralle ausgebildet sein können. Die aus einem Kunststoff gebildete Steckerbuchse kann in dem aus einem Kunststoffmaterial hergestellten zweiten Halterelement als separates Bauteil eingesetzt sein. Vorzugsweise weist das zweite Halterelement eine universell ausgebildete Buchsenaufnahme auf, sodass sich unterschiedliche Steckerbuchsen einsetzen lassen.

Ferner kann vorgesehen sein, dass die Steckerbuchse in das zweite Halterelement eingespritzt bzw. direkt an dieses mit angespritzt ist. Die Steckerbuchse ist demnach im zweiten Halterelement mittels Spritzguss einstückig bzw. stoffschlüssig integriert. Folglich liegt lediglich ein einziges Kunststoffbauteil vor, welches gleichzeitig die Steckerbuchse der Anzündereinheit und das zweite Halterelement des Anzünderträgers ist.

Ein Aspekt sieht vor, dass das Gasgeneratorgehäuse zumindest einen Verschlussteil umfasst, an dem die Baugruppe, insbesondere das erste Halterelement davon, befestigt ist, vorzugsweise mittels einer Schweißverbindung. Das Gasgeneratorgehäuse kann zweiteilig ausgebildet sein, wobei es neben dem Verschlussteil einen toroidförmigen bzw. kappen- oder halbschalenförmigen Diffusor umfasst, die miteinander verbunden sind, beispielsweise verschweißt sind. Der Diffusor kann Ausströmöffnungen umfassen, durch die bei einer Aktivierung des Gasgenerators bestimmungsgemäß Aufblasgas von Inneren des Gasgenerators in einen umliegenden Luftsack abgegeben werden kann. Die Baugruppe kann in einfacher Weise mit dem Verschlussteil gekoppelt werden, indem das erste Halterelement beispielsweise mit einem umgeformten Abschnitt des Verschlussteils verschweißt ist. Das erste Halterelement und das Verschlussteil können beide aus einem Metall gebildet sein, sodass sich in einfacher Weise eine Schweißverbindung ausbilden lässt, die eine Abdichtung einer angrenzenden Brennkammer gewährleistet. Aufgrund des gleichen Materialtyps lässt sich eine optimale Fügeverbindung zwischen dem Anzünderträger, insbesondere dem ersten Halterelement, und dem Gasgeneratorgehäuse erzeugen.

Der Gasgenerator kann ein pyrotechnischer Gasgenerator, ein Hybridgasgenerator, ein Gurtstraffer oder ein Aktuator sein, insbesondere für einen Motorhaubenaufsteller oder einen Überrollbügel eines Fahrzeugs, wobei das Gasgeneratorgehäuse rohrförmig oder toroidförmig ist. Insofern lässt sich der Gasgenerator für verschiedene Zwecke einsetzen, beispielsweise als Teil einer Fahrzeuginsassenschutzvorrichtung, die ein Airbagmodul umfasst, oder als ein allgemeiner Aktuator, insbesondere zum Fußgängerschutz.

Die Erfindung stellt demnach auch eine Baugruppe bereit, die einen erfindungsgemäßen Anzünderträger und eine Anzündereinheit umfasst.

Hierbei kann bei der Baugruppe das erste Halterelement zumindest bereichsweise umgeformt sein, sodass die Anzündereinheit vom ersten Halterelement zumindest teilweise aufgenommen ist. Zusätzlich oder alternativ ist es möglich, dass die Anzündereinheit, insbesondere ein Anzünder davon, mit dem ersten Halterelement zumindest bereichsweise verklebt ist.

Außerdem kann bei der Baugruppe die Anzündereinheit eine Steckerbuchse umfassen, die in das zweite Halterelement eingesetzt ist oder die an das zweite Halterelement angespritzt ist, um mit diesem ein einstückiges Bauteil auszubilden. Vorzugsweise weist die Steckerbuchse dabei ein Erdungselement auf, welches das erste Halterlement elektrisch leitend kontaktiert.

Ferner stellt die Erfindung ein Verfahren zur Herstellung eines erfindungsgemäßen Gasgenerators bereit, insbesondere eines Gasgenerators der zuvor genannten Art, mit den folgenden Schritten:
- Bereitstellen eines Gasgeneratorgehäuses eines ersten Halterelements, eines zweiten Halterelements, und eines Anzünders,
- Einsetzen des Anzünders in das erste Halterelement, optionales vorheriges Einsetzen eines Dichtungselements in dasselbige, und Befestigen des Anzünders an dem ersten Halterelement, vorzugsweise durch Krimpen und/oder Verkleben, zur Ausbildung einer vorgefertigten Montagegruppe,
- Einsetzen der vorgefertigten Montagegruppe in eine Öffnung des Gasgeneratorgehäuses, und Befestigen, vorzugsweise mittels Verschweißen, der vorgefertigten Montagegruppe an einem Bereich des ersten Halterelements mit dem Gasgeneratorgehäuse und
- Einsetzen des zweiten Halterelements in die Öffnung des Gasgeneratorgehäuses in Richtung der vorgefertigten Montagegruppe, mit vorzugsweisem Ausrichten des zweiten Halterelements zu dem ersten Halterelement in umlaufender Richtung, bis das zweite Halterelement am ersten Halterelement anliegt, wobei das erste und zweite Halterelement miteinander befestigt durch ein formschlüssiges und kraftschlüssiges Ineinandergreifen eines ersten Sägezahnprofils des ersten Halterelements und eines zweiten Sägezahnprofils des zweiten Halterelements, wobei insbesondere die beiden Halterelemente im Bereich ihrer Sägezahnprofile zusätzlich miteinander verklebt werden. Die Klebung kann an den jeweiligen Sägezahnprofilen der Halterelemente erfolgen, da dort eine große Fügefläche vorliegt.

Wie bereits erläutert, lässt sich der Anzünderträger zweiteilig ausbilden, wobei die Halterelemente separat und einzeln in das Gasgeneratorgehäuse eingebracht werden. Dementsprechend müssen die beiden Halterelemente nicht zuvor miteinander verbunden werden, um eine Einheit auszubilden, die zusammen in das Gasgeneratorgehäuse eingebracht wird. Das erste Halterelement kann mit dem Gasgeneratorgehäuse, insbesondere einem Verschlussteil des Gasgeneratorgehäuses, verschweißt werden, wodurch sich in einfacher Weise eine dichte Verbindung mit dem die Brennkammer aufweisenden Gasgeneratorgehäuse ergibt. Die gesamte Brennkammer des Gasgenerators ist demnach von Metallteilen umschlossen, sodass die Wandungen der Brennkammer aus demselben Materialtyp gebildet sein können.

Zudem lässt sich das aus Metall hergestellte Halterelement des Anzünderträgers zur Kontaktierung von Masse- bzw. Kurzschlusselementen verwenden. Die Implementierung einer Masse- bzw. Kurzschlussverbindung ist somit vereinfacht, da über das Halterelement bereits eine elektrisch leitende Verbindung mit dem Gasgeneratorgehäuse ausgebildet ist. Es kann demnach ein Erdungselement vorgesehen werden, welches das zweite Halterelement des Anzünderträgers, das aus einem Kunststoff hergestellt ist, elektrisch leitend überbrückt.

Alternativ kann das zweite Halterelement aus einem elektrisch leitfähigen Kunststoff gebildet sein, sodass kein separates Erdungselement verwendet werden muss. Der Anzünderträger ist dennoch mehrteilig ausgebildet, wobei das erste, aus einem Metall gebildete Halterelement werkzeugfallend ist, sodass es nicht nachbearbeitet werden muss. Aufgrund der formschlüssigen Kopplung der beiden Halterelemente müssen diese auch nicht zunächst miteinander verbunden werden.

Ein Aspekt sieht vor, dass der Anzünder am ersten Halterelement befestigt wird, indem das erste Halterelement teilweise umgeformt wird. Dementsprechend lässt sich der Anzünder in einfacher Weise am Anzünderträger positionsgetreu anbringen. Das erste Halterelement lässt sich also plastisch verformen, um den Anzünder aufzunehmen. Beispielsweise wird der Anzünder in das erste Halterelement zumindest teilweise gebördelt oder gekrimpt.

Ferner kann eine Steckerbuchse der Anzündereinheit in das zweite Halterelement eingesetzt werden, insbesondere eingespritzt werden. Die Steckerbuchse kann die zur Masseleitung notwendigen Bauteile umfassen, mit denen der in die Steckerbuchse einzusetzende Stecker zusammenwirkt. Beispielsweise kann eine Kurzschlussfeder vorgesehen sein, die die Kontaktstifte der Anzündereinheit kurzschließt, sofern kein Stecker eingesteckt ist. Die Kurzschlussfeder sowie ein zur Masseleitung notwendiges Erdungselement können durch ein gemeinsames Metalleinlegeteil ausgebildet sein, wobei das Erdungselement beispielsweise als Massekralle ausgebildet ist. Das Erdungselement krallt sich demnach in das erste Halterelement ein, wenn die beiden Halterelemente zusammengesetzt werden.

Alternativ können die Steckerbuchse und das zweite Halterelement einstückig miteinander verbunden werden, indem die Steckerbuchse in das zweite Halterelement eingespritzt wird, sodass sich ein Bauteil ergibt, das gleichzeitig Teil des Anzünderträgers und der Anzündereinheit ist. Die aus einem Kunststoff hergestellte Steckerbuchse und das aus einem Kunststoff hergestellte zweite Halterelement werden spritzgusstechnisch entsprechend miteinander verbunden. Die Steckerbuchse kann an das bereits hergestellte Halterelement angespritzt werden, wobei sich das einstückig ausgebildete Bauteil ergibt. Ferner können die Steckerbuchse und das zweite Halterelement gleichzeitig in einem Zwei-Komponenten-Spritzgussverfahren hergestellt werden, sodass sich eine stoffschlüssige Verbindung ergibt.

Demnach ist also ein Verfahren möglich, bei dem eine vorgefertigte Steckerbuchse, welche optional ein integriertes Erdungselement aufweist, in das zweite Halterelement eingesetzt wird. Oder eine Steckerbuchse wird durch ein Einspritzen bzw. Anspritzen an das zweite Halterelement, optional umfassend ein Erdungselement, hergestellt. Für beide Verfahren gilt, dass im Falle des Vorhandenseins des Erdungselements dieses mit dem ersten Halterelement elektrisch leitend kontaktiert wird.

An dem Verfahren ist besonders von Vorteil, dass zuerst eine kompakte, nur zwei Bauteile umfassende, vorgefertigte Montagegruppe erzeugt wird. Indem zuerst nur der Anzünder in das erste Halterelement eingesetzt und an diesem befestigt wird, ist lediglich ein äußerst kleiner Raumbedarf für diese Montage erforderlich. Hierbei ist vorgesehen, dass der Anzünder in axialer Richtung in eine Aufnahmeöffnung des ersten Halterelements eingesetzt wird und ein Halteabschnitt, der als axial hervorstehender, radial umlaufender Randbereich des ersten Halterelements ausgebildet ist, radial einwärts auf einen entsprechenden Umfangsbereich des Anzünders umgelegt bzw. an diesen aufgekrimpt wird. Optional vor dem Einsetzen des Anzünders kann noch ein Dichtungselement, vorzugsweise ein O-Ring, in die Aufnahmeöffnung des ersten Halterelements eingesetzt werden, um danach auf dieses Dichtungselement den Anzünder einzusetzen, um die Dichtigkeit zwischen der Verbindung zwischen Anzünder und ersten Halterelement zu erhöhen. Um diese Dichtigkeit noch zusätzlich zu erhöhen könnte der Anzünder zusätzlich noch an dem ersten Halterelement durch eine Verklebung befestigt sein, wobei die Verklebung mit einer geeigneten Klebemasse, welche das Dichtungselement und entsprechende Kontaktbereiche des Anzünders und des ersten Halterelements bedeckt, ausgeführt ist. Eine derartige Verklebung kann auch ohne das Dichtungselement und alternativ dazu sogar ohne das Krimpen des umlaufenden Randbereichs des ersten Halterelements erfolgen, wobei demnach der Anzünder lediglich durch die Verklebung in dem ersten Halterelement gehalten und an diesem befestigt ist.Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine Schnittansicht eines teilweise dargestellten erfindungsgemäßen Gasgenerators mit einer erfindungsgemäßen Baugruppe,
- Figur 2 eine Perspektivansicht eines ersten Halterelements eines erfindungsgemäßen Anzünderträgers,
- Figur 3 eine Schnittansicht des ersten Halterelements aus Figur 2,
- Figur 4 eine Perspektivansicht eines zweiten Halterelements eines erfindungsgemäßen Anzünderträgers,
- Figur 5 eine Schnittansicht des zweiten Halterelements aus Figur 4,
- Figur 6 eine teiltransparente Darstellung des zweiten Halterelements aus Figur 4,
- Figur 7 ein erster Verfahrensschritt zur Herstellung eines erfindungsgemäßen Gasgenerators,
- Figur 8 ein zweiter Verfahrensschritt zur Herstellung eines erfindungsgemäßen Gasgenerators,
- Figur 9 ein dritter Verfahrensschritt zur Herstellung eines erfindungsgemäßen Gasgenerators, und
- Figur 10 ein vierter Verfahrensschritt zur Herstellung eines erfindungsgemäßen Gasgenerators.

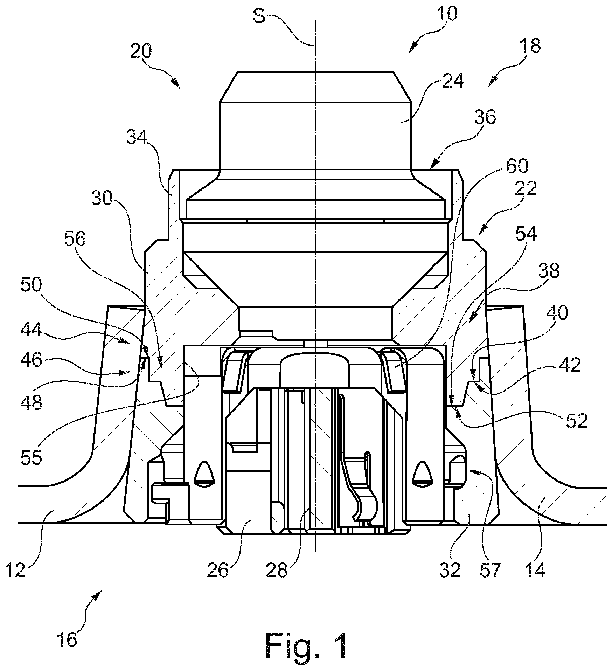

In Figur 1 ist ein Gasgenerator 10 teilweise in einer Schnittdarstellung gezeigt, der ein Aufblasgas für einen Gassack erzeugen kann, durch den ein Fahrzeuginsasse eines Kraftfahrzeugs bei einem Unfall geschützt werden kann.

Der Gasgenerator 10 umfasst ein Gasgeneratorgehäuse 12, von dem in Figur 1 lediglich ein Verschlussteil 14 teilweise gezeigt ist. Das gesamte Gasgeneratorgehäuse 12 kann eine toroidale Form aufweisen, wobei neben dem Verschlussteil 14 ein hier nicht dargestellter torodial bzw. kappenförmiger oder halbschalenförmiger geformter Diffusor vorgesehen ist, an dem das Verschlussteil 14 befestigt ist, beispielsweise angeschweißt ist. Dementsprechend kann der gesamte Gasgenerator 10 im Wesentlichen torodial ausgebildet sein, indem der Diffusor, welcher Gasaustrittsöffnungen aufweisen kann, als eine erste Halbschale ausgebildet ist, welche mit dem Verschlussteil 14, das als eine komplementär zu dem Diffusor ausgebildete zweite Halbschale ausgebildet ist, radial umlaufend fest verbunden, insbesondere verschweißt, ist.

Der Gasgenerator 10 weist eine axial mittige Längsachse S auf und ist im Wesentlichen symmetrisch bezüglich der Längsachse S ausgebildet.

Der Gasgenerator 10 umfasst ferner eine Baugruppe 16, die am Gasgeneratorgehäuse 12, insbesondere dem Verschlussteil 14, befestigt ist, wobei die Baugruppe 16 das Gasgeneratorgehäuse 12 abschließt bzw. verschließt, sodass eine Brennkammer 18 im Gasgeneratorgehäuse 12 ausgebildet ist, an die die Baugruppe 16 angrenzt.

In der Brennkammer, die hier nur bereichsweise dargestellt ist, kann ein nicht dargestellter Treibstoff aufgenommen sein, der bei Aktivierung des Gasgenerators 10 angezündet und abgebrannt wird, um Gas, beispielsweise zum Aufblasen eines Luftsackes, zu produzieren. Dabei kann der Treibstoff aus einer Schüttung einzelner Treibstoffkörper, wie z.B. gepressten Treibstofftabletten oder extrudierten Körpern, aber auch in Form eines monolithischen Formkörpers oder in Form von aneinandergereihten Scheiben bzw. Ringen bestehen.

Die Baugruppe 16 weist eine Anzündereinheit 20 sowie einen Anzünderträger 22 auf, der die Anzündereinheit 20 zumindest teilweise im Gasgeneratorgehäuse 12 trägt. Der Anzünderträger 22 bildet die Schnittstelle zwischen Gasgeneratorgehäuse 12 und Anzündereinheit 20. Generell wird über den Anzünderträger 22 sichergestellt, dass die Anzündereinheit 20 eine gewünschte Lage in Bezug auf das Gasgeneratorgehäuse 12 hat.

Die Anzündereinheit 20 umfasst einen Anzünder 24, der teilweise in die Brennkammer 18 ragt, sowie eine Steckerbuchse 26, die auch als Retainer bezeichnet werden kann, in die ein Stecker (nicht dargestellt) eingesteckt werden kann, um den Anzünder 24 elektrisch zu kontaktieren bzw. mit einer Steuerung zu koppeln, die die Anzündereinheit 20 steuert bzw. aktivieren kann. Der Anzünder 24 weist hierzu Kontaktstifte 28 auf, die innerhalb der Steckerbuchse 26 aufgenommen bzw. von dieser umgeben sind. Beispielsweise ist die Steckerbuchse 26 ein Kunststoffteil.

Der Anzünder 24 sowie die Steckerbuchse 26 werden jeweils vom Anzünderträger 22 gehalten, wie aus der Figur 1 hervorgeht.

Hierzu weist der Anzünderträger 22 ein erstes Halterelement 30 sowie ein zweites Halterelement 32 auf, die separat voneinander ausgebildet und formschlüssig miteinander gekoppelt sind, insbesondere in Umfangsrichtung sowie in radialer Richtung. Die beiden Halterelemente 30, 32 sind zudem aus unterschiedlichen Werkstoffen gebildet.

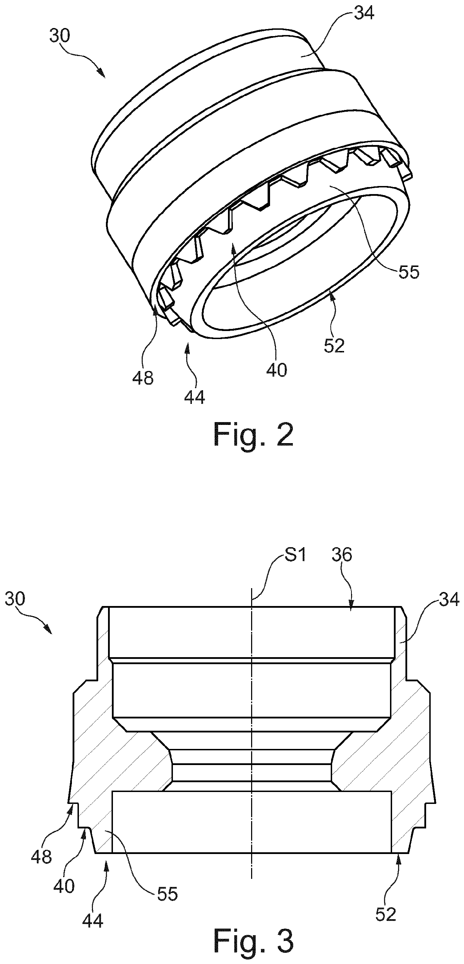

In der gezeigten Ausführungsform ist das erste Halterelement 30 aus einem Metall gebildet, sodass es elektrisch leitfähig ist, wohingegen das zweite Halterelement 32 aus einem Kunststoff hergestellt ist, der elektrisch nicht leitfähig ist. Die beiden Halterelemente 30, 32 sind in den Figuren 2 bis 6 jeweils detailliert dargestellt.

Das erste Halterelement 30 dient zur Fixierung des Anzünders 24 im Gasgeneratorgehäuse 12. Hierzu weist das erste Halterelement 30 einen axial vorstehenden, ringförmigen Halterabschnitt 34 auf, der kragenförmig ausgebildet ist. Der Halterabschnitt 34 kann an seinem freien Ende (plastisch) umgeformt werden, um den Anzünder 24 positionssicher aufzunehmen, insbesondere wird hierbei der Halterabschnitt 34 umgebördelt oder umgekrimpt, insbesondere radial einwärts auf einen entsprechenden Umfangsbereich des Anzünders. Es wird vorzugsweise lediglich ein unterer Bereich des Anzünders 24, also ein den Kontaktstiften 28 zugewandter Bereich, vom Halterabschnitt 34 gehalten, sodass sich ein oberer Bereich, also ein den Kontaktstiften 28 abgewandter Bereich, des Anzünders 24 in die Brennkammer 18 erstreckt, wobei der obere Bereich bei einer Aktivierung des Anzünders 24 geöffnet werden kann und heiße Gase bzw. Partikel freigeben kann, welche den Treibstoff (nicht dargestellt) in der Brennkammer anzünden können.

Alternativ oder zusätzlich zu der beschriebenen (plastischen) Umformung des Halteabschnitts 34 ist es auch möglich, dass der Anzünder 24 in dem ersten Halterelement 30 mittels einer Verklebung fixiert bzw. befestigt wird.

Zwischen dem Anzünder 24 und dem ersten Halterelement 30 kann ein hier nicht dargestelltes Dichtungselement eingelegt sein, um eine Dichtigkeit im Anbindungsbereich zu erhöhen. Bei dem Dichtungselement kann es sich beispielsweise um einen O-Ring handeln, der zwischen dem Anzünder 24 und dem ersten Halterelement 30 eingequetscht ist. Das erste Halterelement 30 bildet somit über den Halterabschnitt 34 eine Aufnahme 36 für den Anzünder 24 und das optionale Dichtungselement aus.

Die formschlüssige Verbindung 38 der beiden Halterelemente 30, 32 ergibt sich unter anderem aufgrund eines ersten Sägezahnprofils 40 am ersten Halterelement 30 sowie eines zweiten Sägezahnprofils 42 am zweiten Halterelement 32, wie insbesondere aus den Figuren 2 bis 6 hervorgeht.

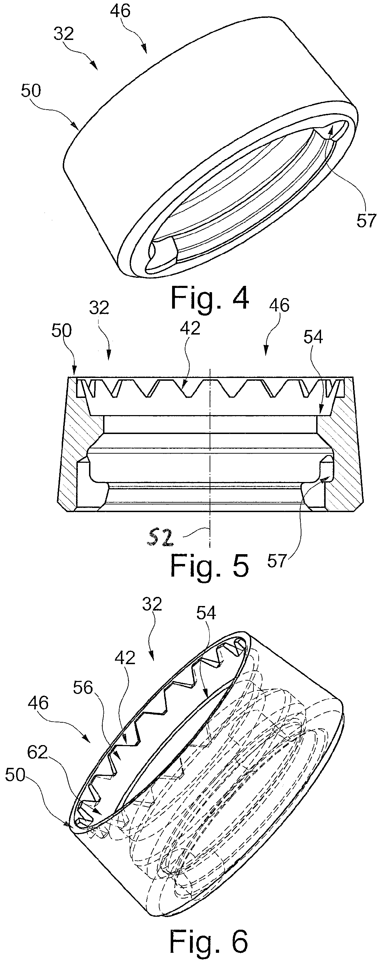

Generell sind die beiden Halterelemente 30, 32 im Wesentlichen symmetrisch ausgebildet, wobei sie ebenfalls jeweils eine Längsachse S1, S2 aufweisen (siehe Figuren 3 und 5). Die Längsachsen S1, S2 fallen im montierten Zustand mit der Längsachse S des Gasgenerators 10 zusammen (siehe Figur 1).

Die beiden Sägezahnprofile 40, 42 sind jeweils ringförmig umlaufend ausgebildet, wobei die entsprechenden Spitzen in axiale Richtung weisen. Die Sägezahnprofile 40, 42 sind an axialen Endbereichen 44, 46 des ersten Halterelements 30 bzw. des zweiten Halterelements 32 vorgesehen. Die axialen Endbereiche 44, 46 liegen sich im zusammengesetzten Zustand des Anzünderträgers 22 gegenüber, sodass die beiden Sägezahnprofile 40, 42 ineinander eingreifen (siehe Figur 1). Hierdurch ergibt sich ein Formschluss in Umfangsrichtung zwischen beiden Halterelementen 30, 32, über den eine Verdrehsicherung ausgebildet ist.

Das erste Halterelement 30 weist zudem eine gegenüber dem ersten Sägezahnprofil 40 radial außenliegende und axial, von dem zweiten Halterelement 32 wegweisende, zurückversetzte Anschlagsfläche 48 auf, die mit einer zweiten Anschlagsfläche 50 zusammenwirkt, die am zweiten Halterelement 32 ausgebildet ist. Die zweite Anschlagsfläche 50 ist ebenfalls radial außenliegend und gegenüber dem zweiten Sägezahnprofil 42 axial, zu dem ersten Halterelement 30 hinweisend, vorgelagert, sodass beide Anschlagsflächen 48, 50 im zusammengesetzten Zustand aneinander anliegen (siehe Figur 1).

Des Weiteren weist das erste Halterelement 30 eine gegenüber dem ersten Sägezahnprofil 40 radial innenliegende und axial, zu dem zweiten Halterelement 32 hinweisende, vorgelagerte erste Kontaktfläche 52 auf, die im zusammengesetzten Zustand an einer zweiten Kontaktfläche 54 anliegt, die am zweiten Halterelement 32 ausgebildet ist. Die zweite Kontaktfläche 54 ist gegenüber dem zweiten Sägezahnprofil 42 radial innenliegend und axial, von dem ersten Halterelement 30 wegweisend, zurückversetzt.

Die erste Kontaktfläche 52 ist an einem kragenförmigen Abschnitt 55 vorgesehen, der ringförmig und hülsenartig ausgebildet ist. Der kragenförmige Abschnitt 55 stellt über eine innere Zylindermantelfläche eine Führung für die Anzündereinheit 20 bereit, insbesondere für die Steckerbuchse 26, wie beispielsweise aus Figur 1 hervorgeht.

Sowohl die Anschlagsflächen 48, 50 als auch die Kontaktflächen 52, 54 sind jeweils ringförmig ausgebildet, sodass sich über die Anschlagsflächen 48, 50 bzw. die Kontaktflächen 52, 54 eine durchgehende Anlage in Umfangsrichtung ergibt, wenn sich der Anzünderträger 22 im zusammengesetzten Zustand befindet.

Aus der Figur 1 geht insbesondere hervor, dass die beiden Halterelemente 30, 32 über die Anschlagsflächen 48, 50, die beiden Sägezahnprofile 40, 42 sowie die Kontaktflächen 52, 54 jeweils stufenförmig aneinander anliegen. Demnach stellt der axiale Endbereich 46 des zweiten Halterelements 32 eine Führung 56 für den axialen Endbereich 44 des ersten Halterelements 30 dar, wenn beide Halterelemente 30, 32 ineinander gesteckt werden bzw. sind. Die Stabilität des Anzünderträgers 22 ist entsprechend erhöht.

Insbesondere ist aufgrund der stufigen Verbindung der beiden Halterelemente 30, 32 eine Formschlussverbindung in radialer Richtung geschaffen, da der axiale Endbereich 44 des ersten Halterelements 30 zumindest teilweise in den axialen Endbereich 46 des zweiten Halterelements 32 eingesteckt ist. Über die beiden Sägezahnprofile 40, 42 ergibt sich die Formschlussverbindung in Umfangsrichtung, die als Verdrehsicherung wirkt. Die Formschlussverbindung in axialer Richtung wird entsprechend über die Anschlagsflächen 48, 50, die Kontaktflächen 52, 54 und die Sägezahnprofile 40, 42 geschaffen.

Das zweite Halterelement 32 weist zudem wenigstens einen Hinterschnitt 57 auf, über den sich die Steckerbuchse 26 in gewünschter Weise am zweiten Halterelement 32 anordnen und befestigen lässt (siehe Figur 5).

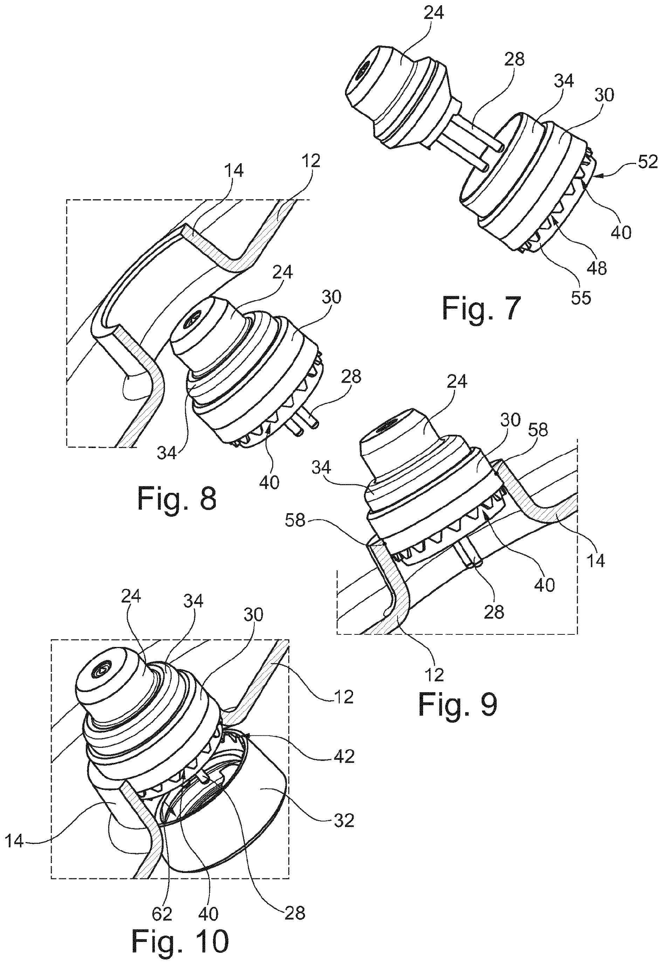

Anhand der Figuren 7 bis 10 wird nachfolgend erläutert, wie der in Figur 1 dargestellte Gasgenerator 10 hergestellt wird.

Zunächst wird der Anzünder 24 der Anzündereinheit 20 mit dem ersten Halterelement 30 gekoppelt, indem der Anzünder 24 zunächst in das Halterelement 30 eingesetzt wird, insbesondere in die Aufnahme 36 (siehe Figur 7). In diesem Schritt kann auch das optionale Dichtungselement, zwischen dem ersten Halterelement 30 und dem Anzünder 24 positioniert, eingesetzt werden. Anschließend wird das Halterelement 30, insbesondere der Halterabschnitt 34, bereichsweise (plastisch) umgeformt, sodass der Anzünder 24 positionsgetreu im ersten Halterelement 30 aufgenommen ist. Der Anzünder 24 kann somit eingecrimpt oder eingebördelt werden.

Nachdem der Anzünder 24 mit dem ersten Halterelement 30 verbunden ist, wird das erste Halterelement 30 in das Gasgeneratorgehäuse 12, insbesondere das Verschlussteil 14, eingepresst. Dies geht aus Figur 8 hervor.

Anschließend kann das erste Halterelement 30 mit dem Gasgeneratorgehäuse 12, insbesondere dem Verschlussteil 14, über eine Schweißverbindung verbunden werden, die durch zwei Schweißpunkte 58 in Figur 9 angedeutet ist. Die Schweißverbindung kann umlaufend ausgebildet sein, wodurch eine dichte Verbindung zwischen dem ersten Halterelement 30 und dem Gasgeneratorgehäuse 12 gewährleistet ist.

Nachdem das erste Halterelement 30 mit dem Gasgeneratorgehäuse 12 gekoppelt ist, kann das zweite Halterelement 32 mit dem ersten Halterelement 30 gekoppelt werden (siehe Figur 10). Hierzu wird das zweite Halterelement 32 ebenfalls in das Gasgeneratorgehäuse 12 eingepresst, bis es an das erste Halterelement 30 anschlägt, das bereits positionsgetreu am Gasgeneratorgehäuse 12 befestigt ist. Hierzu kann gegebenenfalls noch ein Ausrichten in umlaufender Richtung des zweiten Halterelements 32 gegenüber dem ersten Halterelement 30 erforderlich sein, damit die Sägezahnprofile 40, 42 der beiden Halterelemente 30, 32 entsprechend formkompatibel ineinander passend positioniert sind.

Zuvor kann eine Klebemasse auf das zweite Sägezahnprofil 42 aufgebracht werden, sodass das erste Halterelement 30 und das zweite Halterelement 32 zudem über die Sägezahnprofile 40, 42 miteinander verklebt werden. Alternativ oder ergänzend kann eine Klebemasse auf das erste Sägezahnprofil 40 aufgebracht werden. Die beiden Sägezahnprofile 40, 42 stellen dabei eine große Fügefläche dar.

Wie aus der Figur 10 hervorgeht, umfasst das zweite Halterelement 32 eine Steckerbuchsenschnittstelle 62, über die die Steckerbuchse 26 in das zweite Halterelement 32 eingesetzt werden kann.

Das zweite Halterelement 32 kann im Allgemeinen derart ausgebildet sein, dass verschiedenartig ausgebildete Steckerbuchsen, welche insbesondere verschiedene geometrische Form-Codierungen aufweisen können, in das zweite Halterelement 32 eingesetzt werden können. Demnach handelt es sich um eine universelle Steckerbuchsenschnittstelle 62.

Die Steckerbuchse 26 kann aus einem Kunststoffmaterial hergestellt sein, wobei ein nicht näher dargestelltes Metalleinlegeteil vorgesehen ist (siehe Figur 1), das zumindest eine Kurzschlussfeder und zumindest ein Erdungselement 60 umfasst, über das eine Masseleitung zum Gasgeneratorgehäuse 12 hergestellt werden kann. Sobald ein Stecker in die Steckerbuchse 26 eingesteckt wird, wird das Kurzschlusselement derart von den Kontaktstiften 28 weggedrückt, dass der vorher elektrisch leitende Kurzschluss zwischen beiden Kontaktstiften 28 aufgehoben wird.

Gemäß der in Figur 1 gezeigten Ausführungsform ist das zumindest eine Erdungselement 60 als eine elektrisch leitende Massekralle ausgebildet, die sich beim Einsetzen des zweiten Halterelements 32 in das erste Halterelement 30, das aus einem Metall gebildet ist, einkrallt. Da das erste Halterelement 30 mit dem Gasgeneratorgehäuse 12 elektrisch leitend verbunden ist, ergibt sich hierüber eine Erdung des Gasgeneratorgehäuses 12 bzw. wird das Gasgeneratorgehäuse 12 auf dasselbe elektrische Potenzial gebracht wie eine Fahrzeugkarosserie eines Fahrzeugs, in dem der Gasgenerator untergebracht ist. Dadurch ist also ein sogenannter "Masseanschluss" möglich, was bedeutet, dass der Stecker, welcher in die Steckerbuchse steckbar ist, einen metallischen Massekontaktanschluss aufweist, der elektrisch leitend über das Erdungselement, weiter über das erste Halterelement bis hin zu dem Gasgeneratorgehäuse leitend verbunden werden kann, um einen gewünschten elektrischen Potentialausgleich zwischen dem elektrischen Potential des Fahrzeugs, insbesondere der Fahrzeugkarosse, und dem elektrischen Potential des Gasgeneratorgehäuses darzustellen.

Alternativ zum Einsetzen der Steckerbuchse 26 in das zweite Halterelement 32 kann die Steckerbuchse 26 in das zweite Halterelement 32 eingespritzt sein. Dann liegt lediglich ein einziges Kunststoffbauteil vor, das gleichzeitig Teil des Anzünderträgers 22 (als zweites Halterelement 32) und Teil der Anzündereinheit 20 ist (als Steckerbuchse 26). Beispielsweise werden das zweite Halterelement 32 und die Steckerbuchse 26 hierbei gleichzeitig in einem Zweikomponenten-Spritzgussverfahren hergestellt. Alternativ kann die Steckerbuchse 26 an das zweite Halterelement 32 angespritzt werden, wobei sich ebenfalls ein einstückiges Bauteil ergibt.

Es sind somit ein Anzünderträger 22, eine Baugruppe 16 sowie ein Gasgenerator 10 geschaffen, die in einfacher und kostengünstiger Weise herstellbar und montierbar sind und zusätzlich noch eine Massekontaktierung bzw. einen Masseanschluss ermöglichen können.

## Patentansprüche

1. Anzünderträger (22) für eine Anzündereinheit (20) eines Gasgenerators (10), mit einem ersten Halterelement (30) aus einem ersten Werkstoff und einem zweiten Halterelement (32) aus einem zweiten, zum ersten Werkstoff unterschiedlichen Werkstoff, wobei beide Halterelemente (30, 32) formschlüssig miteinander koppelbar und zumindest teilweise formschlüssig ineinander steckbar sind, **dadurch gekennzeichnet, dass** beide Halterelemente (30, 32) in Umfangsrichtung und in radialer Richtung formschlüssig koppelbar sind wobei das erste Halterelement (30) ein erstes Sägezahnprofil (40) aufweist und das zweite Halterelement (32) ein zweites Sägezahnprofil (42) aufweist, das mit dem ersten Sägezahnprofil (40) des ersten Halterelements (30) formschlüssig korrespondiert.

2. Anzünderträger (22) nach Anspruch 1, **dadurch gekennzeichnet, dass** beide Sägezahnprofile (40, 42) jeweils an einem axialen Endbereich (44, 46) des entsprechenden Halterelements (30, 32) vorgesehen sind und jeweils zumindest bereichsweise ringförmig umlaufend ausgebildet sind.

3. Anzünderträger (22) nach Anspruch 1 oder 2, **dadurch gekennzeichnet, dass** das erste Halterelement (30) eine gegenüber dem ersten Sägezahnprofil (40) radial außenliegende und axial von dem zweiten Halterelement (32) wegweisende zurückversetzte erste Anschlagsfläche (48) aufweist und dass das zweite Halterelement (32) eine gegenüber dem zweiten Sägezahnprofil (42) radial außenliegende und axial zu dem ersten Halterelement (30) hinweisende vorgelagerte zweite Anschlagsfläche (50) aufweist, wobei beide Anschlagsflächen (48, 50) im zusammengesetzten Zustand der beiden Halterelemente (30, 32) aneinander anliegen und jeweils ringförmig ausgebildet sind.

4. Anzünderträger (22) nach einem der vorhergehenden Ansprüche, **dadurch gekennzeichnet, dass** das erste Halterelement (30) eine gegenüber dem ersten Sägezahnprofil (40) radial innenliegende und axial zu dem zweiten Halterelement (32) hinweisende vorgelagerte erste Kontaktfläche (52) aufweist und dass das zweite Halterelement (32) eine gegenüber dem zweiten Sägezahnprofil (42) radial innenliegende und axial von dem ersten Halterelement (30) wegweisende zurückversetzte zweite Kontaktfläche (54) aufweist, wobei beide Kontaktflächen (52, 54) im zusammengesetzten Zustand der beiden Halterelemente (30, 32) aneinander anliegen und jeweils ringförmig ausgebildet sind.

5. Baugruppe (16) umfassend einen Anzünderträger (22) nach einem der vorhergehenden Ansprüche und eine Anzündereinheit (20).

6. Baugruppe (16) nach Anspruch 5, **dadurch gekennzeichnet, dass** das erste Halterelement (30) zumindest bereichsweise umgeformt ist, sodass die Anzündereinheit (20) vom ersten Halterelement (30) zumindest teilweise aufgenommen ist.

7. Baugruppe (16) nach Anspruch 5 oder 6, **dadurch gekennzeichnet, dass** die Anzündereinheit (20), insbesondere ein Anzünder (24) davon, mit dem ersten Halterelement (30) zumindest bereichsweise verklebt ist.

8. Baugruppe (16) nach Anspruch 7, **dadurch gekennzeichnet**, die Anzündereinheit (20) eine Steckerbuchse (26) aufweist, die in das zweite Halterelement (32) eingesetzt ist.

9. Gasgenerator (10) mit einer Baugruppe (16) nach einem der Ansprüche 5 bis 8, wobei ein Gasgeneratorgehäuse (12) vorgesehen ist, in dem die Baugruppe (16) zumindest teilweise aufgenommen ist.

10. Gasgenerator (10) nach Anspruch 9, **dadurch gekennzeichnet, dass** das Gasgeneratorgehäuse (12) zumindest ein Verschlussteil (14) umfasst, an dem die Baugruppe (16), insbesondere das erste Halterelement (30), befestigt ist, vorzugsweise mittels einer Schweißverbindung.

11. Gasgenerator (10) nach Anspruch 9 oder 10, **dadurch gekennzeichnet, dass** der Gasgenerator (10) ein pyrotechnischer Gasgenerator, ein Hybridgasgenerator, ein Gurtstraffer oder ein Aktuator ist, insbesondere für einen Motorhaubenaufsteller oder einen Überrollbügel eines Fahrzeugs, wobei das Gasgeneratorgehäuse (12) rohrförmig oder toroidförmig ist.

12. Verfahren zur Herstellung eines Gasgenerators (10) nach einem der Ansprüche 9-11 mit den folgenden Schritten:
a) Bereitstellen eines Gasgeneratorgehäuses (12), eines ersten Halterelements (30), eines zweiten Halterelements (32), und eines Anzünders (24),
b) Einsetzen des Anzünders (24) in das erste Halterelement (30) und Befestigen des Anzünders (24) an dem ersten Halterelement (30) zur Ausbildung einer vorgefertigten Montagegruppe,
c) Einsetzen der vorgefertigten Montagegruppe in eine Öffnung des Gasgeneratorgehäuses (12) und Befestigen der vorgefertigten Montagegruppe an einem Bereich des ersten Halterelements (30) mit dem Gasgeneratorgehäuse (12) und
d) Einsetzen des zweiten Halterelements (32) in die Öffnung des Gasgeneratorgehäuses (12) in Richtung der vorgefertigten Montagegruppe, bis das zweite Halterelement (32) am ersten Halterelement (30) anliegt, wobei das erste Halterelement (30) und das zweite Halterelement (32) miteinander befestigt werden durch ein formschlüssiges und kraftschlüssiges Ineinandergreifen eines ersten Sägezahnprofils (40) des ersten Halterelements (30) und eines zweiten Sägezahnprofils (42) des zweiten Halterelements (32).

13. Verfahren nach Anspruch 12, **dadurch gekennzeichnet, dass** eine vorgefertigte Steckerbuchse (26) in das zweite Halterelement (32) eingesetzt wird, oder dass eine Steckerbuchse (26) durch ein Einspritzen bzw. Anspritzen an das zweite Halterelement (32) hergestellt wird.

14. Verfahren nach Anspruch 13, **dadurch gekennzeichnet, dass** die vorgefertigte Steckerbuchse (26) ein integriertes Erdungselement (60) aufweist, oder dass die durch das Einspritzen bzw. Anspritzen an das zweite Halterelement (32) hergestellte Steckerbuchse (26) ein Erdungselement (60) umfasst, wobei das Erdungselements (60) mit dem ersten Halterelement (32) elektrisch leitend kontaktiert wird.

## Claims

1. An igniter support (22) for an igniter unit (20) of a gas generator (10) comprising a first holder element (30) made from a first material and a second holder element (32) made from a second material different from the first material, wherein both holder elements (30, 32) can be positively coupled and can be at least partially positively nested, **characterized in that** both holder elements (30, 32) can be positively coupled in circumferential and in the radial direction, wherein the first holder element (30) has a first sawtooth profile (40) and the second holder element (32) has a second sawtooth profile (42) corresponding positively to the first sawtooth profile (40) of the first holder element (30).

2. The igniter support (22) according to claim 1, **characterized in that** each of the two sawtooth profiles (40, 42) is provided at an axial end section (44, 46) of the respective holder element (30, 32) and is formed to be annularly circumferential at least in some areas.

3. The igniter support (22) according to claim 1 or 2, **characterized in that** the first holder element (30) includes a first stop face (48) which is radially external vis-à-vis the first sawtooth profile (40) and axially reset, facing away from the second holder element (32) and, **in that** the second holder element (32) includes a second stop face (50) which is radially external vis-à-vis the second sawtooth profile (42) and axially projecting, facing the first holder element (30), both stop faces (48, 50) in the assembled condition of the two holder elements (30, 32) being adjacent to each other and each being ring-shaped.

4. The igniter support (22) according to any one of the preceding claims, **characterized in that** the first holder element (30) includes a first contact surface (52) which is radially internal vis-à-vis the first sawtooth profile (40) and axially projecting, facing the second holder element (32), and, **in that** the second holder element (32) includes a second contact surface (54) which is radially internal vis-à-vis the second sawtooth profile (42) and axially reset, facing away from the first holder element (30), both contact surfaces (52, 54) in the assembled condition of the two holder elements (30, 32) being adjacent to each other and each being ring-shaped.

5. A subassembly (16) comprising an igniter support (22) according to any one of the preceding claims and an igniter unit (20).

6. The subassembly (16) according to claim 5, **characterized in that** the first holder element (30) is formed at least in some areas so that the igniter unit (20) is received at least partially by the first holder element (30).

7. The subassembly (16) according to claim 5 or 6, **characterized in that** the igniter unit (20), especially an igniter (24) thereof, is bonded to the first holder element (30) at least in some areas.

8. The subassembly (16) according to claim 7, **characterized in that** the igniter unit (20) includes a socket (26) which is inserted in the second holder element (32).

9. A gas generator (10) comprising a subassembly (16) according to any one of the claims 5 to 8, wherein a gas generator housing (12) is provided in which the subassembly (16) is at least partially received.

10. The gas generator (10) according to claim 9, **characterized in that** the gas generator housing (12) includes at least one closing member (14) to which the subassembly (16), especially the first holder element (30) is fastened, preferably by means of welding.

11. The gas generator (10) according to claim 9 or 10, **characterized in that** the gas generator (10) is a pyrotechnic gas generator, a hybrid gas generator, a belt tensioner or an actuator, especially for a hood prop or a roll-over bar of a vehicle, the gas generator housing (12) being tube-shaped or toroid shaped.

12. A method for manufacturing a gas generator (10) according to any one of the claims 9 to 11 comprising the following steps:
a) providing a gas generator housing (12), a first holder element (30), a second holder element (32) and an igniter (24),
b) inserting the igniter (24) into the first holder element (30) and fastening the igniter (24) to the first holder element (30) for forming a prefabricated assembly group,
c) inserting a prefabricated assembly group into an opening of the gas generator housing (12) and fastening the prefabricated assembly group at a portion of the first holder element (30) to the gas generator housing (12) and
d) inserting the second holder element (32) into the opening of the gas generator housing (12) in the direction of the prefabricated assembly group until the second holder
element (32) is adjacent to the first holder element (30), wherein the first holder element (30) and the second holder element (32) are fastened to each other by positive and non-positive engagement of a first sawtooth profile (40) of the first holder element (30) and a second sawtooth profile (42) of the second holder element (32).

13. The method according to claim 12, **characterized in that** a prefabricated socket (26) is inserted into the second holder element (32) or **in that** a socket (26) is manufactured by being injected in or attached by injection molding to the second holder element (32).

14. The method according to claim 13, **characterized in that** the prefabricated socket (26) comprises an integrated ground element (60) or **in that** the socket (26) manufactured by being injected in or attached by injection molding to the second holder element (32) comprises a ground element (60), wherein the ground element (60) is made to contact the first holder element (32) in an electrically conducting manner.

## Revendications

1. Support allumeur (22) pour une unité d'allumage (20) d'un générateur de gaz (10), avec un premier élément de support (30) fait d'un premier matériau et un deuxième élément de support (32) fait d'un deuxième matériau différent du premier matériau, pour lequel les deux éléments de support (30, 32) peuvent être couplés par forme l'un à l'autre et au moins partiellement emboîtés par forme l'un dans l'autre, **caractérisé en ce que** les deux éléments de support (30, 32) peuvent être couplés par forme dans la direction circonférentielle et dans la direction radiale, pour lequel le premier élément de support (30) présente un premier profil en dents de scie (40) et le second élément de support (32) présente un second profil en dents de scie (42), lequel correspond par forme au premier profil en dents de scie (40) du premier élément de support (30).

2. Support allumeur (22) selon la revendication 1, **caractérisé en ce que** les deux profils en dents de scie (40, 42) sont prévus chacun sur une région d'extrémité axiale (44, 46) de l'élément de support correspondant (30, 32) et sont chacun au moins partiellement annulaires.

3. Support allumeur (22) selon la revendication 1 ou 2, **caractérisé en ce que** le premier élément de support (30) présente une première surface de butée (48) en retrait face au premier profil en dents de scie (40) et reposant radialement à l'extérieur et axialement du deuxième élément de support (32) de sorte que le deuxième élément de support (32) présente une deuxième surface de butée amont (50) située radialement à l'extérieur du deuxième profil en dents de scie (42) et pointant axialement vers le premier élément de support (30), pour lequel les deux surfaces de butée (48, 50) à l'état assemblé des deux éléments de support (30, 32) s'appuient l'une contre l'autre et ont chacune une forme annulaire.

4. Support allumeur (22) selon l'une des revendications précédentes, **caractérisé en ce que** le premier élément de support (30) présente une première surface de contact (52) située en avant du premier profil en dents de scie (40) et pointant axialement vers le deuxième élément de support (32) de sorte que le deuxième élément de support (32) a une deuxième surface de contact (54), qui est située radialement à l'intérieur et axialement éloignée du premier élément de support (30) et est en retrait par rapport au deuxième profil en dents de scie (42), pour lequel les deux surfaces de contact (52, 54) à l'état assemblé des deux éléments de support (30, 32) s'appuient l'une contre l'autre et ont chacune une forme annulaire.

5. Ensemble (16) comprenant un support allumeur (22) selon l'une quelconque des revendications précédentes et une unité d'allumage (20).

6. Ensemble (16) selon la revendication 5, **caractérisé en ce que** le premier élément de support (30) est au moins partiellement formée de sorte que l'unité d'allumage (20) soit au moins partiellement reçue par le premier élément de support (30).

7. Ensemble (16) selon la revendication 5 ou 6, **caractérisé en ce que** l'unité d'allumage (20), notamment un allumeur (24) de celui-ci, est au moins partiellement collé sur le premier élément de support (30).

8. Ensemble (16) selon la revendication 7, **caractérisé en ce que** l'unité d'allumage (20) comporte une prise mâle (26) qui est insérée dans le deuxième élément de support (32).

9. Générateur de gaz (10) avec un ensemble (16) selon l'une des revendications 5 à 8, pour lequel est prévu un corps de générateur de gaz (12) dans lequel l'ensemble (16) est au moins partiellement reçu.

10. Générateur de gaz (10) selon la revendication 9, **caractérisé en ce que** le corps du générateur de gaz (12) comprend au moins une pièce d'obturation (14) à laquelle l'ensemble (16), en particulier le premier élément de support (30), est fixé, de préférence au moyen d'une liaison soudée.

11. Générateur de gaz (10) selon la revendication 9 ou 10, **caractérisé en ce que** le générateur de gaz (10) est un générateur de gaz pyrotechnique, un générateur de gaz hybride, un prétensionneur de ceinture ou un actionneur, notamment pour un lève-capot ou un arceau de sécurité d'un véhicule, pour lequel le corps du générateur de gaz (12) est tubulaire ou toroïdal.

12. Procédé de fabrication d'un générateur de gaz (10) selon l'une quelconque des revendications 9 à 11 selon les étapes suivantes :
a) Fournir un corps de générateur de gaz (12), un premier élément de support (30), un second élément de support (32) et un allumeur (24),
b) Insérer l'allumeur (24) dans le premier élément de support (30) et fixer l'allumeur (24) au premier élément de support (30) pour former un groupe d'assemblage préfabriqué,
c) Insérer le groupe d'assemblage préfabriqué dans une ouverture du corps de générateur de gaz (12) et fixer le groupe d'assemblage préfabriqué à une région du premier élément de support (30) avec le corps de générateur de gaz (12) et
d) Insérer le deuxième élément de support (32) dans l'ouverture du corps de générateur de gaz (12) en direction du groupe d'assemblage préfabriqué jusqu'à ce que le second élément de support (32) repose sur le premier élément de support (30), pour lequel le premier élément de support (30) et le deuxième élément de support (32) sont fixés l'un à l'autre par un emboîtement de forme et en force d'un premier profil en dents de scie (40) du premier élément de support (30) et d'un deuxième profil en dents de scie (42) du deuxième élément de support (32).

13. Procédé selon la revendication 12, **caractérisé en ce qu'**une prise mâle préfabriquée (26) est insérée dans le deuxième élément de maintien (32), ou **en ce qu'**une prise mâle (26) est réalisée par injection ou moulage sur le deuxième élément de support (32).

14. Procédé selon la revendication 13, **caractérisé en ce que** la prise mâle préfabriquée (26) comporte un élément de mise à la terre intégré (60), ou **en ce que** la prise mâle (26) réalisée par injection ou moulage sur le deuxième élément de support (32) comporte un élément de mise à la terre (60), pour lequel l'élément de mise à la terre (60) est en contact électriquement conducteur avec le premier élément de support (32).
